# EUROPÄISCHE PATENTSCHRIFT

(11) **EP 3 510 690 B1**
(45) Veröffentlichungstag und Bekanntmachung des Hinweises auf die Patenterteilung: **14.07.2021**
(21) Anmeldenummer: 17764383.0
(22) Anmeldetag: 07.09.2017
(51) Int. Cl.: H02K 1/16, H02K 1/18, H02K 1/20

(54) **SEGMENTBLECH FÜR EIN STATORBLECHPAKET, STATORBLECHPAKET, SOWIE GENERATOR UND WINDENERGIEANLAGE MIT SELBIGEN**
SEGMENT SHEET FOR A STATOR LAMINATION STACK, STATOR LAMINATION STACK, AND GENERATOR AND WIND TURBINE HAVING SAME
TÔLE SEGMENTÉE POUR UN EMPILAGE DE TÔLES DE STATOR, EMPILAGE DE TÔLES DE STATOR, AINSI QUE GÉNÉRATEUR ET ÉOLIENNE COMPRENANT CES DERNIERS

(30) Priorität: 09.09.2016 DE 102016217173
(43) Veröffentlichungstag der Anmeldung: 17.07.2019
(73) Patentinhaber: Wobben Properties GmbH, 26607 Aurich (DE)
(72) Erfinder: RÖER, Jochen, 27777 Ganderkesee (DE)
(74) Vertreter: Eisenführ Speiser
(86) Internationale Anmeldenummer: PCT/EP2017/072428
(87) Internationale Veröffentlichungsnummer: WO 2018/046583

(56) Entgegenhaltungen:
- CN-U- 204 615 540
- CN-Y- 201 113 573
- US-A1- 2011 001 320
- US-A1- 2011 210 560
- US-A1- 2012 133 145
- US-A1- 2013 313 835

## Beschreibung

Die Erfindung betrifft ein Segmentblech für ein Statorblechpaket eines Generators einer Windenergieanlage gemäß dem Oberbegriff von Anspruch 1. Die Erfindung betrifft ferner ein Statorblechpaket für einen Generator einer Windenergieanlage, sowie einen Generator einer Windenergieanlage und eine Windenergieanlage.

Windenergieanlagen sind allgemein bekannt. Sie werden genutzt, um Windenergie mittels eines elektrischen Generators in elektrische Energie zu wandeln. Kernelement für diese Aufgabe ist in Windenergieanlagen der Generator. Der Generator weist einen Generatorstator und einen relativ dazu umlaufenden Generatorrotor auf, auch als "Läufer" bezeichnet. Die Erfindung betrifft sowohl Windenergieanlagen und Generatoren mit Innenläufern, als auch Außenläufern, worunter verstanden wird, dass bei einem Innenläufer der Generatorrotor innen in einem ringförmigen Stator umläuft, während bei einem Außenläufer der Generatorrotor außen um den Stator umläuft.

Der Generatorstator weist eine Statorwicklung auf, in der mittels des umlaufenden Generatorrotors eine elektrische Spannung induziert wird. Die Statorwicklung ist in Nuten aufgenommen, die wiederum im Stator, etwa in einem Statorring, vorgesehen sind.

Es ist allgemein bekannt, das Bauteil, welches die Statorwicklung aufnimmt, aus einem oder mehreren Statorblechpaketen auszubilden. Jene Statorblechpakete werden durch Segmentbleche gebildet, die zu Ringen aneinandergelegt und zum Bilden der Blechpakete aufeinander gestapelt werden.

Die mechanische Instabilität der einzelnen Bleche konnte hierbei im Stand der Technik nur teilweise dadurch kompensiert werden, dass die Bleche zu Paketen gestapelt und miteinander verbunden wurden. Am Stator musste bislang zum Stützen der Statorblechpakete stets eine Stützkonstruktion vorgesehen werden, in der Regel als Schweiß- oder Gussbaugruppe, die die Statorblechpakete versteift.

Dieser Umstand bedingt eine gewisse Fertigungstiefe auf Seiten des Windenergieanlagenherstellers, sowie einen vergleichsweise hohen Kosten- und Fertigungsaufwand. Dies wurde als verbesserungswürdig angesehen.

Das Deutsche Patent- und Markenamt hat in der Prioritätsanmeldung zu vorliegender Anmeldung folgenden Stand der Technik recherchiert: DE 10 2008 063 783 A1 und EP 2 424 077 A2.

US 2011/210560 A1 betrifft einen axial gekühlten Generator mit einem Stator. Der Stator umfasst einen Statorkern, der sich aus einem Statorblechpaket, und außenseitiq am Blechpaket angeordneten Flanschrinqen und Kernrinqen zusammensetzt, die über Kernbolzen zusammengehalten werden. In einem äußeren Abschnitt der Statorbleche sind Durchbrüchen zum Führen eines Kühlluftstromes durch den Statorkern vorgesehen.

US 2011/001320 A1 offenbart einen Stator für einen Generator, der eine Vielzahl hintereinander angeordneter, in Umfangsrichtung in eine Vielzahl von Segmenten unterteilte Statorbleche aufweist. Jedes Segment umfasst einen ersten Abschnitt mit Aussparungen zum Aufnehmen der Statorwicklung und mindestens einen zweiten, geschlossenen radialen Abschnitt. An dem zweiten radialen Abschnitt sind radial nach außen vorstehende Nocken mit Ausnehmungen für Verspannbolzen ausgebildet.

Der Erfindung lag folglich die Aufgabe zugrunde, die im Stand der Technik vorgefundenen Nachteile möglichst weitgehend zu überwinden. Insbesondere lag der Erfindung die Aufgabe zugrunde, eine Möglichkeit zu finden, den Herstellungs- und Kostenaufwand für Windenergieanlagen zu senken, ohne die mechanische Integrität des Generatorstators der Windenergieanlage zu kompromittieren.

Die Erfindung löst die ihr zugrunde liegende Aufgabe, indem sie ein Segmentblech mit den Merkmalen von Anspruch 1 vorschlägt. Insbesondere schlägt die Erfindung vor, dass das Segmentblech benachbart zu dem zweiten radialen Abschnitt einen dritten radialen Abschnitt aufweist, der ein Segment einer Stator-Tragstruktur des Generators bildet. Insbesondere ist der dritte radiale Abschnitt also dazu eingerichtet, im Verbund mit den dritten radialen Abschnitten weiterer Segmentbleche die Stator-Tragstruktur des Generators zu bilden. Die Erfindung folgt hierbei dem Ansatz, eine zusätzliche, externe Konstruktion dadurch entbehrlich zu machen, dass die Statorblechpakete, die aus den Segmentblechen gebildet werden, selbsttragend sind, also keine externen Anbauteile zum Sicherstellen der mechanischen Integrität erfordern. Zu diesem Zweck wird das Segmentblech benachbart zu dem Bereich, der das magnetische Joch ausbilden soll, radial erweitert und weist eine Tragstruktur auf, die die Stabilität eines aus ihren Segmentblechen gebildeten Blechrings erhöht.

Das Segmentblech ist hinsichtlich der Stator-Tragstruktur erfindingsgemäß weitergebildet, indem in dem dritten radialen Abschnitt mehrere Versteifungsstreben ausgebildet sind, wobei die Versteifungsstreben zur Aufnahme von Druck-, Zug- und Schubkräften ausgebildet sind.

Weiter vorzugsweise sind in dem dritten radialen Abschnitt mehrere Durchgangsöffnungen ausgebildet, die zur Durchführung von korrespondierenden Verspannelementen angepasst sind. Die Durchgangsöffnungen sind vorzugsweise entlang von zwei oder mehr voneinander beabstandeten Kreisbogenlinien angeordnet, wobei die Kreisbogenlinien vorzugsweise konzentrisch ausgebildet sind. Besonders bevorzugt sind in einer Ausführungsform mit einer ersten Kreisbogenlinie und einer zweiten Kreisbogenlinie, die Durchgangsöffnungen auf einer ersten Kreisbogenlinie in Umfangsrichtung zu den Durchgangsöffnungen auf einer zweiten Kreisbogenlinie versetzt angeordnet. Weiter vorzugsweise sind die Durchgangsöffnungen auf ihren jeweiligen Kreisbogenlinien zueinander äquidistant angeordnet. Diese Anordnung hat folgenden Vorteil: Die Segmentbleche können überlappend aufeinandergestapelt werden, so dass die "Nahtstellen" zwischen den aneinander in einer Ringebenen angrenzenden Segmentblechen zueinander versetzt werden. Zugleich ermöglicht die äquidistante, insbesondere zwei- oder mehrreihige Anordnung der Durchgangsöffnungen eine axiale Verspannung der überlappenden Segmentbleche. Die hierdurch erzeugte Reibhaftung zwischen den Blechen erhöht die Tragfähigkeit der Statorblechpakete signifikant und trägt zu einem besseren Dämpfungsverhalten akustischer Schwingungen bei, die im Betrieb der Windenergieanlage emittiert werden.

Die Verspannelemente sind dazu eingerichtete, aufeinandergestapelte Segmentbleche fest miteinander zu verbinden. Vorzugsweise sind die Verspannelemente in Form von Gewindestangen, Schrauben, Spannseilen oder dergleichen ausgebildet. Vorzugsweise werden bei der Verspannung endseitig an den Verspannelementen Druckverteilerelemente angeordnet, die dazu eingerichtet sind, die Spannkräfte auf eine möglichst große Oberfläche der Segmentbleche zu verteilen. Die Druckverteilerelemente sind beispielsweise als Scheiben, Ringe, Ringsegmente, Hülsen oder dergleichen ausgebildet. Weiter vorzugsweise sind in dem dritten radialen Abschnitt mehrere Materialschwächungen oder -aussparungen zwischen den Versteifungsstreben angeordnet. Die Materialschwächungen bzw. -ausnehmungen haben vorzugsweise den Effekt der Gewichtsreduktion.

Besonders bevorzugt sind die Versteifungsstreben in dem dritten radialen Abschnitt aus der gleichen Materialstärke ausgebildet, wie das Grundblech in dem ersten und/oder zweiten radialen Abschnitt. Die Struktur der Versteifungsstreben wird vorzugsweise mittels, Laserschneiden, Wasserstrahlschneiden, Prägen oder - besonders bevorzugt - Stanzen erhalten.

Besonders bevorzugt sind die Aussparungen im ersten radialen Abschnitt, die Durchgangsöffnungen und die Versteifungsstreben im dritten radialen Abschnitt jeweils mittels Stanzen des Grundblechs ausgebildet, wobei im Fall der Versteifungsstreben Materialbereiche benachbart zu den auszubildenden Streben ausgestanzt oder geprägt werden.

In einer bevorzugten Ausgestaltung des Segmentbleches weisen die Versteifungsstreben mehrere erste Streben auf, die nichtradial ausgerichtet sind. Unter nichtradial wird hierbei verstanden, dass das Segmentblech um eine Mittenachse herum gekrümmt ist, und die ersten Streben jeweils mit einer durch die Mittenachse laufenden Radialen einen Winkel von > 0 Grad aufspannen. Vorzugsweise sind die ersten Streben jeweils mit alternierenden Winkeln nicht radial ausgerichtet und bilden eine fachwerkartige Struktur aus.

Erfindungsgemäß weisen die Versteifungsstreben mehrere zweite Streben auf, die radial ausgerichtet sind. Die radiale Ausrichtung wird hierbei bezogen auf die Mittenachse des Segmentblechs verstanden.

In einer besonders bevorzugten Ausführungsform sind jeweils benachbarte erste Streben zueinander winklig ausgerichtet, und die Durchgangsöffnungen liegen jeweils im Schnittpunkt der Erstreckungsrichtung von jeweils zwei benachbarten ersten Streben. Mit anderen Worten liegen die Durchgangsöffnungen im Winkelursprung des Winkels zwischen benachbarten ersten Streben.

In einer weiteren bevorzugten Ausführungsform sind die zweiten Streben in Richtung der Mittenachse bzw. in Richtung der radial inneren Seite des Segmentblechs verjüngt ausgebildet.

Vorzugsweise sind die ersten und zweiten Streben derart ausgebildet, dass zumindest einige der ersten und zweiten Streben ineinander münden oder einander durchkreuzen. Auf diese Weise wird eine geflechtartige Tragstruktur realisiert, die geringes Gewicht mit hoher mechanischer Belastbarkeit verbindet.

Insbesondere in denjenigen Ausführungsformen, in denen zwischen den Streben Ausnehmungen ausgebildet sind, wirken die Streben zugleich als Kühlrippen, und die Ausnehmungen als Kühlkanäle. Hierdurch wird eine verbesserte Wärmeabfuhr aus den die Statorwicklung aufnehmenden Nuten in Richtung des Maschinenträgers erzielt,

Die Erfindung wurde vorstehend unter Bezugnahme auf das Segmentblech erläutert. In einem weiteren Aspekt betrifft die Erfindung aber ebenso ein Statorblechpaket für einen Generator einer Windenergieanlage. Die Erfindung löst die ihr zugrundeliegende Aufgabe bei einem solchen Statorblechpaket, indem jenes mit den Merkmalen von Anspruch 10 ausgebildet ist. Die Erfindung schlägt vor, dass das Statorblechpaket eine Vielzahl von Segmentblechen aufweist, wobei mehrere Segmentbleche in einer Ebene so aneinander angeordnet sind, dass sie gemeinsam einen Blechring ausbilden, und mehrere Segmentbleche in den gebildeten Blechringen derart gestapelt sind, dass sie gemeinsam das Statorblechpaket ausbilden, wobei das Statorblechpaket einen ersten radialen Abschnitt aufweist, in welchem eine Vielzahl Nuten zur Aufnahme einer Statorwicklung vorgesehen sind, wobei die Nuten durch in den Segmentblechen vorgesehene Aussparungen gebildet sind, sowie benachbart zu dem ersten radialen Abschnitt einen zweiten radialen Abschnitt aufweisen, der ein magnetisches Joch des Generators bildet. Benachbart zu dem zweiten radialen Abschnitt weist das Statorblechpaket einen dritten radialen Abschnitt auf, der eine Statortragstruktur des Generators bildet.

Die Erfindung wird dadurch weiter gebildet, dass die Segmentbleche nach einer der vorstehend beschriebenen bevorzugten Ausführungsformen ausgebildet sind.

Nachdem vorstehend die Erfindung unter weiterer Bezugnahme auf das Statorblechpaket beschrieben wurde, wird nachfolgend auf einen erfindungsgemäßen Generator eingegangen.

Der Generator gemäß der vorliegenden Erfindung löst die eingangs bezeichnete zugrundeliegende Aufgabe, indem er nach den Merkmalen von Anspruch 12 ausgebildet ist.

Die Erfindung schlägt somit einen Generator einer Windenergieanlage vor, insbesondere einen langsam drehenden Synchron-Regenerator, der einen Generatorstator, einen relativ zu dem Generatorstator drehbar gelagerten Generatorrotor, und einen Maschinenträger zum Befestigen des Generatorstators an der Windenergieanlage aufweist, wobei der Generatorstator wenigstens ein Statorblechpaket aufweist, in welchem eine Vielzahl von Nuten vorgesehen sind, in denen die Statorwicklung aufgenommen ist. Der Generatorstator weist wenigstens ein Statorblechpaket auf, das nach einer der vorstehend beschriebenen bevorzugten Ausführungsformen ausgebildet ist und entsprechend erfindungsgemäße Segmentbleche enthält. Unter einem langsam drehenden Generator wird im Sinne der Erfindung ein Generator mit einer Nenndrehzahl von 50 Umdrehungen pro Minute oder weniger verstanden.

Schließlich betrifft die Erfindung in einem weiteren Aspekt eine Windenergieanlage, insbesondere eine getriebelose Windenergieanlage, mit einem Turm, einer auf dem Turm drehbar angeordneten Gondel, einem an der Gondel angeordneten Maschinenträger, einer drehbar an der Gondel gelagerten Nabe mit einer Anzahl von Rotorblättern, insbesondere drei Rotorblättern, und einem Generator zur Bereitstellung elektrischer Energie, der einen mit der Nabe verbundenen Generatorrotor und einen mit dem Maschinenträger verbundenen Generatorstator aufweist.

Die erfindungsgemäße Windenergieanlage löst die ihr zugrundeliegende Aufgabe, indem der Generator nach einer der vorstehend beschriebenen bevorzugten Ausführungsformen ausgebildet ist.

Der Generator ist vorzugsweise alternativ als Innenläufer oder Außenläufergenerator ausgebildet. Ist der Generator ein Innenläufergenerator, stellt der erste radiale Abschnitt des Statorblechpaktes bzw. des Segmentblechs den radial inneren Ringbereich dar, während der dritte radiale Abschnitt den radial äußeren Ringbereich darstellt. Bei einem Außenläufergenerator verhält es sich genau andersherum.

Die Erfindung wird im Folgenden unter Bezugnahme auf die beigefügten Figuren anhand eines bevorzugten Ausführungsbeispiels näher beschrieben. Hierbei zeigen:
- Figur 1: eine Windenergieanlage schematisch in einer perspektivischen Ansicht,
- Figur 2: eine Gondel der Windenergieanlage gemäß Figur 1 schematisch in einer teilgeschnittenen Ansicht,
- Figur 3: eine vergrößerte Darstellung eines Teils der Ansicht aus Figur 2, und
- Figur 4: eine schematische Draufsicht auf ein Segmentblech für ein Statorblechpaket eines Generators einer Windenergieanlage gemäß den Figuren 1 bis 3.

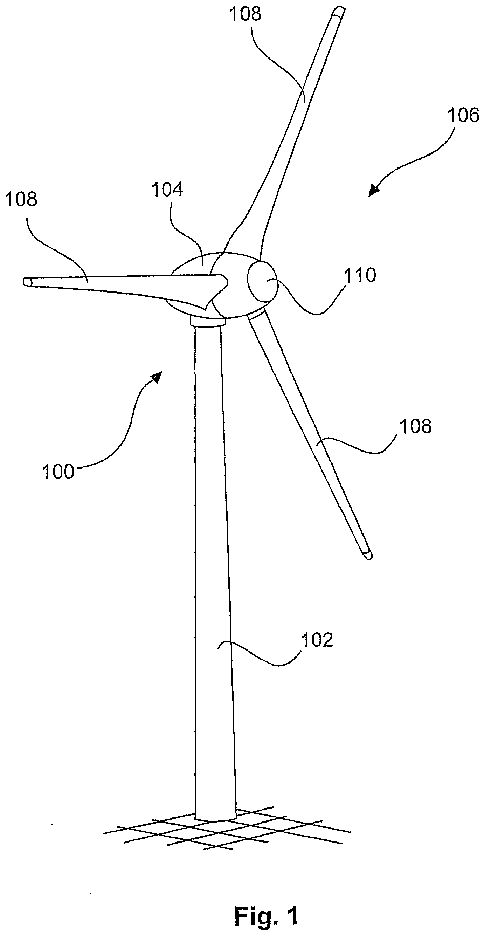

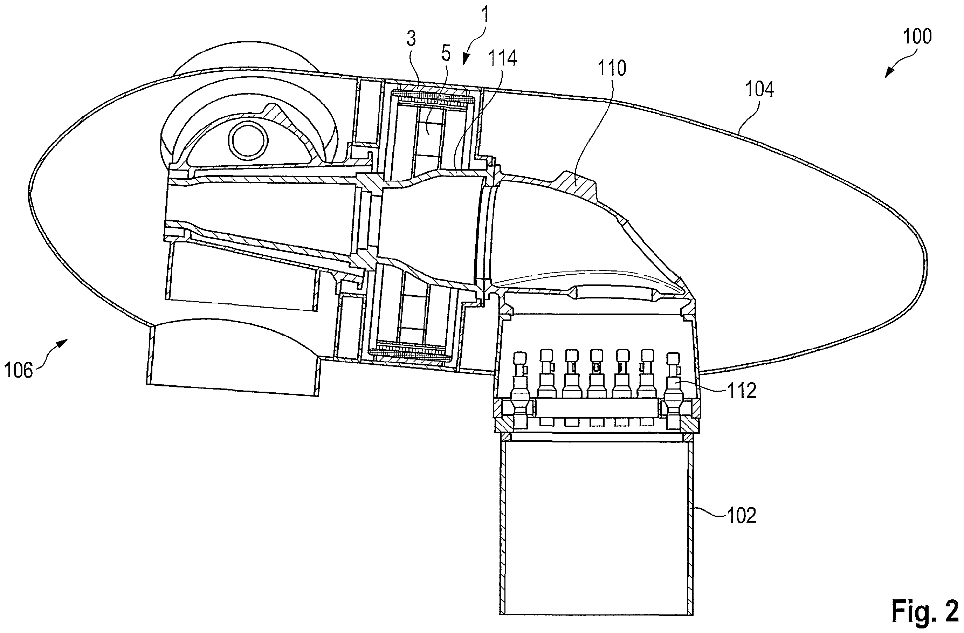

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator 1 (Figur 2) in der Gondel 104 an.

Die Gondel 104 ist in Figur 2 in einer Schnittansicht gezeigt. Die Gondel 104 ist drehbar an dem Turm 102 montiert und mittels eines Azimutantriebs 112 in allgemein bekannter Weise angetrieben verbunden. In der Gondel 104 ist ein Maschinenträger 110 ebenfalls in allgemein bekannter Weise angeordnet, der einen Achszapfen 114 trägt.

Der Generator 1 weist einen Generatorstator 5 auf, der mittels des Achszapfens 114 an dem Maschinenträger 110 in der Gondel 104 befestigt ist. Andere, durch die Erfindung nicht ausgeschlossene Ausgestaltungsmöglichkeiten sehen beispielsweise vor, den Generatorstator 5 unmittelbar an den Maschinenträger 110 oder ein entsprechendes Bauteil der Gondel 104 anzubinden.

Der Generator 1 gemäß Figur 2 weist einen Generatorrotor 3 auf, der als Außenläufer konzipiert ist. Alternative, vom Rahmen Erfindung nicht ausgeschlossene Ausgestaltungsmöglichkeiten sehen beispielsweise auch einen als Innenläufer ausgestalteten Generatorrotor vor.

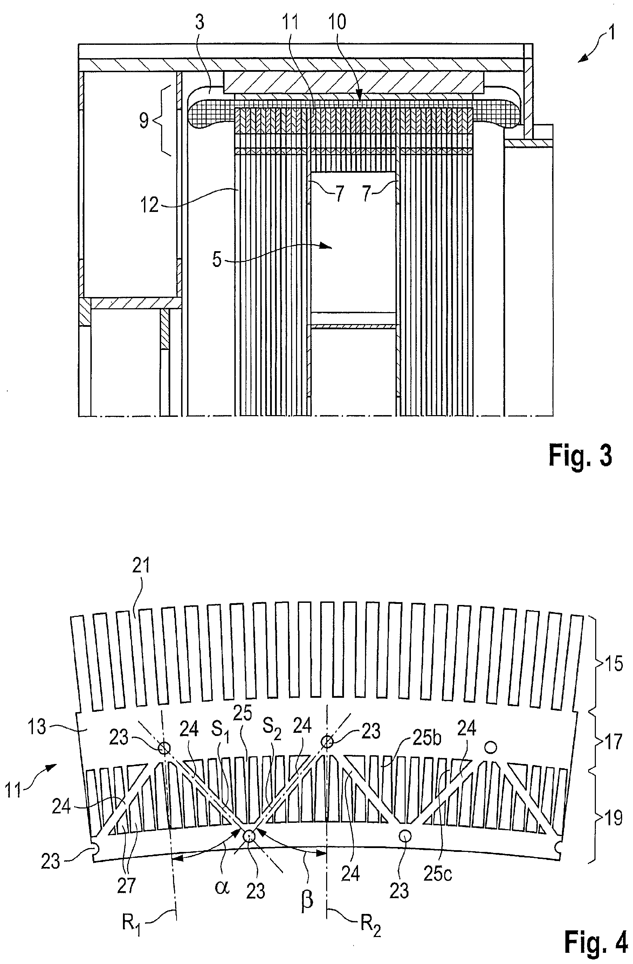

Der Generatorrotor 3 ist drehfest mit der Nabe 106 verbunden. Der nähere Aufbau des Generatorstators 5 ist in Figur 3 gezeigt. Der Generator 5 weist einen Statorring 9 auf. Außerhalb des Statorrings 9, von diesem beabstandet durch einen Ringspalt, läuft der Generatorrotor 3. Der Statorring 9 ist mittels zweier Stützringe 7 an einer Statoraufnahme befestigt. Die Statoraufnahme ist wiederum mit dem Achszapfen 114 verschraubt. Andere Befestigungsmöglichkeiten für den Stator 5 an dem Maschinenträger liegen ebenfalls im Rahmen der Erfindung.

Die Stützringe 7 sind vergleichsweise dünnwandige Bleche,, die die Tragfähigkeit und mechanische Steifigkeit des Statorrings 9 im Wesentlichen unbeeinflusst lassen. Stattdessen ist der Statorring 9 selbsttragend ausgelegt.

Der Statorring 9 ist aus einer Vielzahl von Segmentblechen 11 gebildet, die zu Blechringen 12 aneinandergereiht sind und derart aufeinander gestapelt werden, dass wenigstens ein Statorblechpaket 10 entsteht.

Der Aufbau eines Segmentblechs gemäß der Erfindung ist in Figur 4 gezeigt.

Das in Figur 4 gezeigte Segmentblech 11 weist ein Grundblech 13 auf. Das Segmentblech 11 ist ringsegmentförmig aufgebaut, d.h. es weist einen um eine Mittenachse (nicht dargestellt) gekrümmten kreisbogenförmigen Verlauf auf. Das Segmentblech 11, in Figur 4 als Segmentblech für einen Außenläufer gezeigt, weist einen ersten radialen Abschnitt 15 auf, in dem eine Vielzahl von Aussparungen 21 eingebracht sind. Die Aussparungen 21 sind zur Aufnahme der Statorwicklung angepasst.

Benachbart zu dem ersten radialen Abschnitt 15 weist das Segmentblech 11 einen zweiten radialen Abschnitt 17 auf, der ein Segment des magnetischen Jochs des Generatorstators 5 (Figuren 1 bis 3) ausbildet.

Das magnetische Joch wird auch als magnetischer Rücken bezeichnet. Benachbart zu dem zweiten radialen Abschnitt 17 ist die Struktur des Segmentblechs 11 um einen dritten radialen Abschnitt 19 erweitert. Der dritte radiale Abschnitt 19 weist eine Vielzahl von Durchgangsöffnungen 23 zum Durchführen von Verspannmitteln auf, wie beispielsweise Gewindestangen, Schrauben, Spannseilen und dergleichen.

In dem dritten radialen Abschnitt 19 sind eine Vielzahl von Versteifungsstreben 24, 25 angeordnet, die das Segmentblech 11 versteifen und dazu eingerichtet sind, in montiertem Zustand das Statorblechpaket 10 sowie den Statorring 9 versteifen, um ihn in sich tragfähig zu machen. Die Versteifungsstreben 24, 25 weisen eine Vielzahl erster Streben 24 auf, welche nichtradial ausgerichtet sind. Die ersten Streben 24 spannen jeweils mit einer Radialen R₁, R₂ einen Winkel α, β auf. Winkel α kann betragsmäßig gleich Winkel β sein.

Die zweiten Streben 25 sind im Unterschied zu den ersten Streben 24 radial ausgerichtet. Vorzugsweise verlaufen die zweiten Streben 25 in Richtung der (nicht dargestellten) Mittenachse verjüngt zu. Unter den ersten Streben 25 sind zumindest einige Streben 25b vorhanden, die in zumindest eine erste Strebe 24 einmünden, sowie einige Streben 25c, die jeweils mindestens eine erste Strebe 24 durchkreuzen.

In einer besonders bevorzugten Ausgestaltung sind die Streben 24,25 durch Ausstanzen mehrerer Aussparungen 27 aus dem Grundblech 13 ausgebildet. Vorzugsweise sind sowohl die Aussparungen 21, wie auch die Durchgangsöffnungen 23 und die Aussparungen 27 mittels Stanzen aus dem Grundblech 13 ausgenommen.

Die Durchgangsöffnungen 23 liegen vorzugsweise im Winkelursprung der Winkel α, β der ersten Streben 24, bzw. sind fluchtend auf die Schnittpunkte der Erstreckungsrichtungen zweier jeweils benachbarter erster Streben 24 ausgerichtet.

Während die in den Figuren 1 bis 4 gezeigte Ausgestaltung explizit auf einen Generator 1 mit Außenläufer abstellt, so soll verstanden werden, dass im Geiste der Erfindung jedenfalls auch Generatoren mit Innenläufer umfasst sind, bei denen die gleichen Grundsätze greifen wie vorstehend unter Bezugnahme auf den Außenläufer beschrieben. Der erste radiale Abschnitt 15, der die Aussparungen 21 zur Aufnahme der Statorwicklung aufweist, ist dann allerdings nicht radial außen, sondern radial innen am Segmentblech 11 angeordnet. Für den zweiten und dritten radialen Abschnitt gilt entsprechendes.

## Patentansprüche

1. Segmentblech (11) für ein Statorblechpaket (10) eines Generators (1) einer Windenergieanlage (100), mit
einem Grundblech (13), welches die Form eines Ringsegments aufweist, wobei das Segmentblech (11) einen ersten radialen Abschnitt (15) aufweist, in welchem Aussparungen (21) zur Aufnahme einer Statorwicklung vorgesehen sind, sowie radial benachbart zu dem ersten radialen Abschnitt (15) einen zweiten radialen Abschnitt (17) aufweist, der ein Segment eines magnetischen Jochs des Generators (1) bildet,
wobei das Segmentblech (11) benachbart zu dem zweiten radialen Abschnitt (17) einen dritten radialen Abschnitt (19) aufweist, der ein Segment einer Stator-Tragstruktur des Generators (1) bildet,
**dadurch gekennzeichnet, dass** in dem dritten radialen Abschnitt (19) mehrere Versteifungsstreben (24,25) ausgebildet sind, die mehrere erste (24) und zweite (25) Streben aufweisen, wobei die Versteifungsstreben (19) zur Aufnahme von Druck-, Zug- und Schubkräften ausgebildet sind, und
wobei die mehrere zweite Streben (25) radial ausgerichtet sind.

2. Segmentblech (11) nach Anspruch 1,
wobei in dem dritten radialen Abschnitt (19) mehrere Durchgangsöffnungen (23) ausgebildet sind, die zur Durchführung von korrespondierenden Verspannelementen angepasst sind.

3. Segmentblech (11) nach Anspruch 1 oder 2,
wobei in dem dritten radialen Abschnitt (19) mehrere Materialschwächungen oder - aussparungen (27) zwischen den Versteifungsstreben (24, 25) angeordnet sind.

4. Segmentblech (11) nach einem der Ansprüche 1 bis 3,
wobei die mehrere erste Streben (24) nichtradial ausgerichtet sind.

5. Segmentblech (11) nach Anspruch 4,
wobei jeweils benachbarte erste Streben (24) zueinander winklig ausgerichtet sind, und
wobei
die Durchgangsöffnungen (23) jeweils im Schnittpunkt der Erstreckungsrichtung von jeweils zwei benachbarten ersten Streben (24) angeordnet sind.

6. Segmentblech (11) nach Anspruch 1 oder 5, wobei die zweiten Streben (25) in Richtung der radial inneren Seite des Segmentblechs (11) verjüngt ausgebildet sind.

7. Segmentblech (11) nach einem der Ansprüche 5 oder 6, wobei zumindest einige der ersten und zweiten Streben (24, 25) ineinander münden (25b) oder einander durchkreuzen (25c).

8. Statorblechpaket (10) für einen Generator (1) einer Windenergieanlage (100), mit einer Vielzahl von Segmentblechen (11), wobei
mehrere Segmentbleche (11) in einer Ebene so aneinander angeordnet sind, dass sie gemeinsam einen Blechring ausbilden, und
mehrere Segmentbleche (11) in den gebildeten Blechringen derart gestapelt sind, dass sie gemeinsam das Statorblechpaket (10) ausbilden,
wobei das Statorblechpaket (10) einen ersten radialen Abschnitt aufweist (15), in welchem eine Vielzahl Nuten zur Aufnahme einer Statorwicklung vorgesehen sind, wobei die Nuten durch in den Segmentblechen (11) vorgesehene Aussparungen (21) gebildet sind, sowie
benachbart zu dem ersten radialen Abschnitt (15) einen zweiten radialen Abschnitt (17) aufweisen, der ein magnetisches Joch des Generators (1) bildet,
**dadurch gekennzeichnet, dass** das Statorblechpaket (10) benachbart zu dem zweiten radialen Abschnitt (17) einen dritten radialen Abschnitt (19) aufweist, der eine Stator-Tragstruktur des Generators (1) bildet,
wobei die Segmentbleche (11) nach einem der Ansprüche 1 bis 7 ausgebildet sind.

9. Generator (1) einer Windenergieanlage (100), insbesondere langsam drehender Synchron-Ringgenerator, mit
einem Generatorstator (5), und einem relativ zu dem Generatorstator (5) drehbar gelagerten Generatorrotor (3),
wobei der Generatorstator (5) wenigstens ein Statorblechpaket (10) aufweist, in welchem eine Vielzahl von Nuten vorgesehen sind, in denen die Statorwicklung aufgenommen ist, **dadurch gekennzeichnet, dass** der Generatorstator wenigstens ein Statorblechpaket nach Anspruch 8 aufweist.

10. Windenergieanlage (100), insbesondere getriebelose Windenergieanlage, mit einem Turm (102),
einer auf dem Turm drehbar angeordneten Gondel (104),
einer drehbar an der Gondel gelagerten Nabe (106) mit einer Anzahl von Rotorblättern (108), und einem Generator (1) zur Bereitstellung elektrischer Energie, der einen mit der Nabe verbundenen Generatorrotor (3) und einen mit der Gondel verbundenen Generatorstator (5) aufweist,
**dadurch gekennzeichnet, dass** der Generator nach Anspruch 9 ausgebildet ist.

## Claims

1. A segment plate (11) for a stator lamination assembly (10) of a generator (1) of a wind turbine (100), comprising
a base plate (13) in the form of a ring segment, wherein the segment plate (11) has a first radial portion (15) in which recesses (21) are provided for receiving a stator winding and radially adjacent to the first radial portion (15) a second radial portion (17) forming a segment of a magnetic yoke of the generator (1),
wherein adjacent to the second radial portion (17) the segment plate (11) has a third radial portion (19) forming a segment of a stator carrier structure of the generator (1), **characterised in that** a plurality of reinforcing struts (24, 25) which have a plurality of first struts (24) and second struts (25) are provided in the third radial portion (19),
wherein the reinforcing struts (19) are adapted to carry compressive, tensile and shearing forces, and
wherein the plurality of second struts (25) are radially oriented.

2. A segment plate (11) according to claim 1
wherein provided in the third radial portion (19) are a plurality of through openings (23) which are adapted for the passage of corresponding bracing elements.

3. A segment plate (11) according to claim 1 or 2
wherein a plurality of material weakenings or recesses (27) are arranged in the third radial portion (19) between the reinforcing struts (24, 25).

4. A segment plate (11) according to one of claims 1 to 3
wherein the plurality of first struts (24) are non-radially oriented.

5. A segment plate (11) according to claim 4
wherein respectively adjacent first struts (24) are oriented in angular relationship with each other, and
wherein the through openings (23) are respectively arranged at the point of intersection of the direction in which two adjacent first struts (24) respectively extend.

6. A segment plate (11) according to claim 1 or 5
wherein the second struts (25) are of a tapered configuration in the direction of the radially inward side of the segment plate (11).

7. A segment plate (11) according to one of claims 5 or 6
wherein at least some of the first and second struts (24, 25) open into each other (25b) or cross each other (25c).

8. A stator lamination assembly (10) for a generator (1) of a wind turbine (100) comprising
a multiplicity of segment plate (11), wherein
a plurality of segment plates (11) are arranged at each other in a plane in such a way that they jointly form a plate ring, and
a plurality of segment plates (11) are stacked in the plate rings formed in such a way that they jointly form the stator lamination assembly (10),
wherein the stator lamination assembly (10) has a first radial portion (15) in which there are provided a multiplicity of grooves for receiving a stator winding, wherein the grooves are formed by recesses (21) provided in the segment plates (11), and
adjacent to the first radial portion (15) have a second radial portion (17) forming a magnetic yoke of the generator (1),
**characterised in that** adjacent to the second radial portion (17) the stator lamination assembly (10) has a third radial portion (19) forming a stator carrier structure of the generator (1), wherein the segment plates (11) are in accordance with one of claims 1 to 7.

9. A generator (1) of a wind turbine (100), in particular a slowly rotating synchronous ring generator, comprising
a generator stator (5) and a generator rotor (3) mounted rotatably relative to the generator stator (5),
wherein the generator stator (5) has at least one stator lamination assembly (10) in which there are provided a multiplicity of grooves in which the stator winding is received, **characterised in that** the generator stator has at least one stator lamination assembly according to claim 8.

10. A wind turbine (100), in particular a gear-less wind turbine, comprising
a pylon (102),
a pod (104) arranged rotatably on the pylon,
a hub (106) mounted rotatably to the pod and having a number of rotor blades (108), and a generator (1) for providing electric power, which has a generator rotor (3) connected to the hub and a generator stator (5) connected to the pod,
**characterised in that** the generator is in accordance with claim 9.

## Revendications

1. Tôle segmentée (11) pour un empilement de tôles de stator (10) d'un générateur (1) d'une éolienne (100), avec
une tôle de base (13), laquelle présente la forme d'un segment annulaire, dans laquelle la tôle segmentée (11) présente une première section radiale (15), dans laquelle sont prévus des évidements (21) pour loger un enroulement statorique, ainsi que
présente, de manière radialement adjacente par rapport à la première section radiale (15), une deuxième section radiale (17), qui forme un segment d'une culasse magnétique du générateur (1),
dans laquelle la tôle segmentée (11) présente, de manière adjacente par rapport à la deuxième section radiale (17), une troisième section radiale (19), qui forme un segment d'une structure porteuse de stator du générateur (1),
**caractérisée en ce que** sont réalisées, dans la troisième section radiale (19), plusieurs entretoises de renforcement (24, 25), qui présentent plusieurs premières (24) et deuxièmes (25) entretoises, dans laquelle les entretoises de renforcement (19) sont réalisées pour absorber des forces de pression, de traction et de poussée, et
dans laquelle les plusieurs deuxièmes entretoises (25) sont orientées de manière radiale.

2. Tôle segmentée (11) selon la revendication 1,
dans laquelle sont réalisées dans la troisième section radiale (19) plusieurs ouvertures de passage (23), qui sont adaptées pour le passage d'éléments de serrage correspondants.

3. Tôle segmentée (11) selon la revendication 1 ou 2,
dans laquelle sont disposés dans la troisième section radiale (19) plusieurs affaiblissements de matériau ou évidements de matériau (27) entre les entretoises de renforcement (24, 25).

4. Tôle segmentée (11) selon l'une quelconque des revendications 1 à 3,
dans laquelle les plusieurs premières entretoises (24) ne sont pas orientées de manière radiale.

5. Tôle segmentée (11) selon la revendication 4,
dans laquelle respectivement des premières entretoises (24) adjacentes sont orientées de manière angulaire les unes par rapport aux autres, et
dans laquelle
les ouvertures de passage (23) sont disposées respectivement au point d'intersection de la direction d'extension de respectivement deux premières entretoises (24) adjacentes.

6. Tôle segmentée (11) selon la revendication 1 ou 5,
dans laquelle les deuxièmes entretoises (25) sont réalisées de manière rétrécie en direction du côté radialement intérieur de la tôle segmentée (11).

7. Tôle segmentée (11) selon l'une quelconque des revendications 5 ou 6,
dans laquelle au moins certaines des premières et deuxièmes entretoises (24, 25) débouchent les unes dans les autres (25b) ou se croisent (25c) entre elles.

8. Empilement de tôles de stator (10) pour un générateur (1) d'une éolienne (100), avec une pluralité de tôles segmentées (11), dans lequel
plusieurs tôles segmentées (11) sont disposées dans un plan les unes sur les autres de telle sorte qu'elles réalisent ensemble un anneau en tôle, et
plusieurs tôles segmentées (11) sont empilées dans les anneaux en tôle formés de telle manière qu'elles réalisent ensemble l'empilement de tôles de stator (10),
dans lequel l'empilement de tôles de stator (10) présente une première section radiale (15), dans laquelle sont prévues une pluralité de rainures pour loger un enroulement statorique, dans lequel les rainures sont formées par des évidements (21) prévus dans les tôles segmentées (11), ainsi
qu'une deuxième section radiale (17), qui forme une culasse magnétique du générateur (1), présente de manière adjacente à la première section radiale (15),
**caractérisé en ce que** l'empilement de tôles de stator (10), présente de manière adjacente à la deuxième section radiale (17), une troisième section radiale (19), qui forme une structure porteuse de stator du générateur (1),
dans lequel les tôles segmentées (11) sont réalisées selon l'une quelconque des revendications 1 à 7.

9. Générateur (1) d'une éolienne (100), en particulier générateur annulaire synchrone à rotation lente, avec
un stator de générateur (5), et un rotor de générateur (3) monté de manière à pouvoir tourner par rapport au stator de générateur (5),
dans lequel le stator de générateur (5) présente au moins un empilement de tôles de stator (10), dans lequel sont prévues une pluralité de rainures, dans lesquelles est logé l'enroulement statorique,
**caractérisé en ce que** le stator de générateur présente au moins un empilement de tôles de stator selon la revendication 8.

10. Eolienne (100), en particulier éolienne sans entraînement direct, avec une tour (102),
une nacelle (104) disposée sur la tour,
un moyeu (106) monté de manière à pouvoir tourner sur la nacelle, avec un nombre de pales de rotor (108), et un générateur (1) pour fournir de l'énergie électrique, qui présente un rotor de générateur (3) relié au moyeu et un stator de générateur (5) relié à la nacelle,
**caractérisée en ce que** le générateur est réalisé selon la revendication 9.
